# NOUVEAU FASCICULE DE BREVET EUROPEEN

(11) **EP 2 710 162 B2**
(45) Date de publication et mention de la décision concernant l'opposition: **24.07.2024**
(45) Mention de la délivrance du brevet: 02.03.2016
(21) Numéro de dépôt: 12728629.2
(22) Date de dépôt: 03.05.2012
(51) Int. Cl.: C22C 21/00, F28D 1/04, F28F 13/12, F28F 21/08, B32B 15/01

(54) **ENSEMBLE PLAQUÉ EN ALLIAGES D'ALUMINIUM POUR TUBE D'ECHANGEUR THERMIQUE A PLACAGE INTERNE PROTECTEUR ET A PERTURBATEUR BRASE**
LEGIERUNGEN FÜR EIN WÄRMETAUSCHERROHR MIT INNENSCHUTZSCHICHT UND GELÖTETEM DISRUPTOR
ALLOYS FOR A HEAT EXCHANGER TUBE HAVING AN INNER PROTECTIVE CLADDING AND BRAZED DISRUPTER

(30) Priorité: 20.05.2011 FR 1101559
(43) Date de publication de la demande: 26.03.2014
(73) Titulaire: Constellium Neuf-Brisach, 68600 Biesheim (FR)
(72) Inventeur: PERRIN, Elodie, 68320 Jebsheim (FR); HENRY, Sylvain, F-38430 Saint Jean de Moirans (FR); GERBER, Lionel, F-68000 Colmar (FR)
(74) Mandataire: Constellium - Propriété Industrielle
(86) Numéro de dépôt international: PCT/FR2012/000177
(87) Numéro de publication internationale: WO 2012/160267

(56) Documents cités:
- WO-A1-2008/063855
- WO-A1-2010/060843
- DE-A1- 19 756 487
- US-A- 6 076 727
- US-A1- 2003 183 376
- US-A1- 2007 051 503
- US-B1- 6 234 243

## Description

### Domaine de l'invention

L'invention concerne le domaine des tôles de brasage pour tubes d'échangeurs thermiques en alliages d'aluminium, notamment ceux utilisés pour le refroidissement ou l'optimisation du rendement des moteurs, le chauffage ou la climatisation de l'habitacle.

Sont plus particulièrement concernés les tubes d'échangeurs soumis à un environnement corrosif sévère tels que les tubes de refroidisseurs d'air de suralimentation subissant une recirculation des gaz d'échappement, et généralement munis d'un perturbateur destiné à améliorer l'échange thermique par augmentation de la surface d'échange et perturbation de la circulation du fluide interne.

### Etat de la technique

Les alliages d'aluminium sont désormais majoritairement utilisés dans la fabrication des échangeurs thermiques pour l'automobile en raison de leur faible densité, qui permet un gain de poids, notamment par rapport aux alliages cuivreux, tout en assurant une bonne conduction thermique, une facilité de mise en oeuvre et une bonne résistance à la corrosion.

Tous les alliages d'aluminium dont il est question dans ce qui suit sont désignés, sauf mention contraire, selon les désignations définies par l' « Aluminum Association » dans les « Registration Record Series » qu'elle publie régulièrement.

Les échangeurs comportent des tubes pour la circulation du fluide interne et des ailettes ou intercalaires, ainsi qu'éventuellement un perturbateur, pour augmenter le transfert thermique entre le fluide interne et le fluide externe, et leur fabrication se fait soit par assemblage mécanique, soit par brasage.

Dans le cas des refroidisseurs d'air de suralimentation, connus de l'homme du métier sous l'appellation RAS (refroidisseur d'air de suralimentation), la configuration habituelle est la suivante : la tôle d'âme constituant le tube (communément appelée bande à tube), généralement en alliage d'aluminium de la série AA3xxx, est revêtue sur ses faces externe et interne d'un alliage dit de brasage, généralement de la série AA4xxx. Celui-ci présente l'intérêt de fondre à une température inférieure à la température de fusion de l'âme et, par application d'un cycle thermique de brasage, de pouvoir créer une liaison entre deux matériaux à assembler, c'est à dire braser, ou éventuellement une liaison de la bande à tube sur elle-même afin de fermer le tube par brasage, l'alternative étant le soudage.

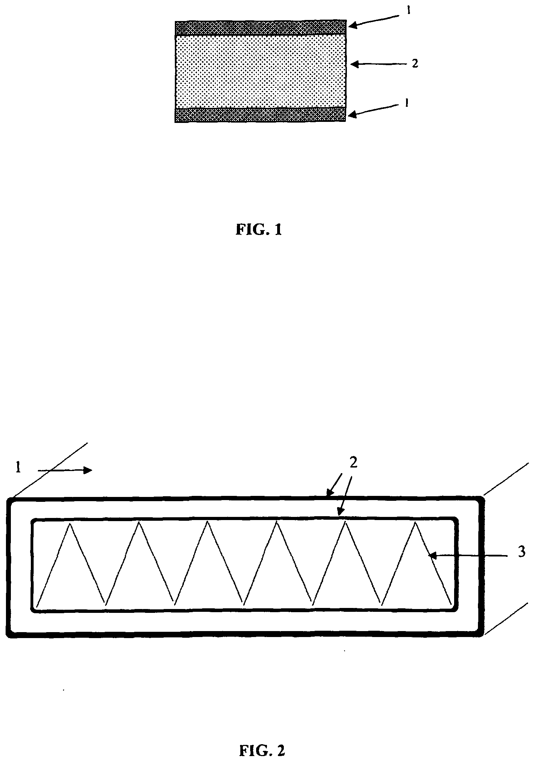

Cette configuration est illustrée par la figure 1, l'âme de la bande à tube portant le repère 2 et ses placages interne et externe en alliage de brasage le repère 1. Les intercalaires, qui se positionnent entre les différents rangs de tubes, sont constitués d'un alliage de la série AA3xxx non plaqué. De la même façon, les perturbateurs, qui sont, quant à eux, insérés dans les tubes, sont également en alliage de la série AA3xxx et non plaqués. Le brasage des intercalaires sur les tubes est assuré par le placage 4xxx de la face externe du tube. Le brasage des perturbateurs dans les tubes est assuré par le placage 4xxx de la face interne du tube. Les alliages AA3xxx utilisés pour les intercalaires et les perturbateurs peuvent être identiques ou non. L'alliage AA3xxx utilisé pour l'âme du tube est le plus souvent en alliage dit « long-life », c'est-à-dire à bonne résistance à la corrosion externe, saline.

Un schéma d'un tel tube à perturbateur est représenté en figure 2, le tube portant le repère 1, le perturbateur le repère 3 et les placages d'alliage de brasage le repère 2. Un exemple en est décrit dans la demande EP 0283937 A1 de Nihon Radiator Co. Ltd.

Il existe aujourd'hui des conceptions de moteurs dans lesquelles des gaz d'échappement sont réinjectés dans le refroidisseur d'air de suralimentation pour y être mélangés avec de l'air propre et ré-envoyés à l'admission, avec le but final de réduire les émissions polluantes des véhicules.

Dans cette configuration, les gaz d'échappement, susceptibles de se condenser, peuvent générer dans le refroidisseur un milieu corrosif particulièrement sévère, caractérisé notamment par un faible pH (pouvant être significativement inférieur à 3).

Dans le cas de la configuration des tubes de l'état de l'art, telle que décrite ci-dessus, une diffusion importante du silicium, contenu dans l'alliage de placage de la série AA4xxx, vers l'alliage d'âme constituant le coeur du tube se produit lors de l'opération de brasage, dégradant par là même sa capacité de résistance à la corrosion.

Une solution connue de l'homme du métier consiste à intercaler lors du colaminage, entre l'alliage d'âme du tube et son revêtement interne en alliage de brasage de la série AA4xxx, un placage intermédiaire en alliage de la série AA1xxx ou AA7xxx.

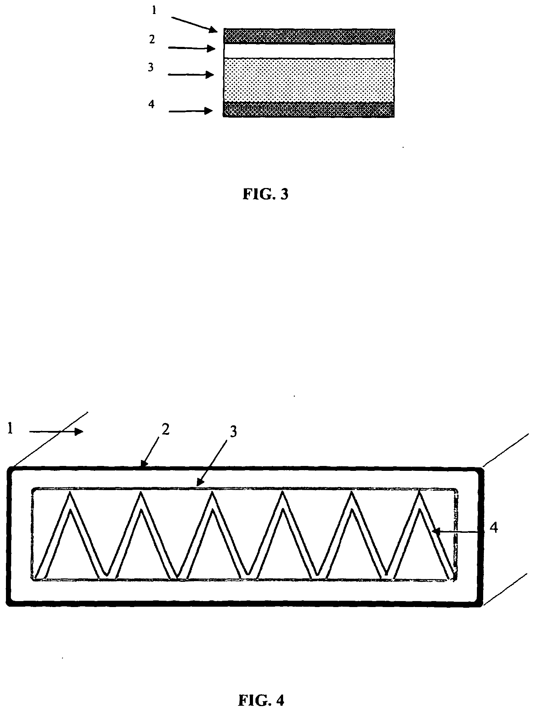

Une telle configuration est représentée schématiquement en figure 3, l'âme du tube portant le repère 3, le revêtement extérieur en alliage de la série AA4xxx le repère 4, le revêtement intérieur également en alliage de la série AA4xxx le repère 1 et le revêtement intermédiaire en alliage de la série AA1xxx ou AA7xxx le repère 2.

Un tel revêtement agit en limitant la diffusion du silicium du placage interne vers l'âme du tube lors du brasage, améliorant ainsi son comportement en corrosion.

Un alliage sacrificiel, typiquement de la série AA7xxx, peut également être utilisé comme alliage de placage intermédiaire.

Ces tôles « multi-plaquées » sont connues de l'homme du métier et décrites notamment dans les demandes JP 2003027166 A de Kobe Steel Ltd. Shinko Alcoa, JP 2005224851 A de Shinko Alcoa Yuso Kizai KK, WO 2006/044500 A2 et WO 2009/142651 A2 d'Alcoa Inc, WO 2007/042206 A1 de Corus Aluminium Walzprodukte GmbH, US 2010/0159272 A1 de Novelis, etc...

L'utilisation de ce type de tôles « multi-plaquées » dans un refroidisseur d'air de suralimentation avec passage de gaz d'échappement est décrite dans la demande WO 2008/063855 de Modine Mfg Co.

Une autre solution, décrite dans les demandes EP 1762810 A1 et US 2007/0051503 A1 de Behr America Inc., consiste à favoriser la création d'une «brown band », connue de l'homme du métier, entre l'âme en alliage de la série AA3xxx du perturbateur et son placage en alliage de la série AA4xxx (typiquement AA4045), lors du brasage de type classique à l'intérieur du tube. Le tube est également typiquement en alliage AA3xxx plaqué AA4xxx sur ses deux faces. Selon un mode de réalisation hautement privilégié, le tube et le perturbateur sont en fait constitués du même matériau.

Toutefois, bien que de telles configurations permettent d'améliorer quelque peu la résistance à la corrosion du tube, elles peuvent s'avérer insuffisantes dans des conditions de sollicitation particulièrement sévères, comme c'est le cas pour les échangeurs thermiques soumis à une recirculation des gaz d'échappement caractérisés en particulier par un faible pH.

D'autres solutions consistent dans l'application d'un traitement de surface après brasage pour améliorer la résistance à la corrosion interne du tube. Tel est le cas de la solution décrite dans la demande FR 2916525 A1 de Valeo Systèmes Thermiques, qui préconise un revêtement à base de résines. Un autre exemple de traitement de surface, en l'occurrence un dépôt électro-céramique, est donné dans la demande WO 2010/019664. La demande FR 2930023 de Valeo Systèmes Thermiques mentionne quant à elle la possibilité de réaliser un boehmitage de l'ensemble de l'échangeur. Enfin, la demande EP 1906131 A2 de International Truck décrit une solution consistant en l'application d'un traitement de surface métallique à base de Ni ou Co sur la face interne du tube et sur le perturbateur.

D'autres solutions enfin résident dans l'utilisation d'une combinaison de matériaux différents, en particulier aluminium et acier inoxydable. La demande WO2008/095578 de Behr GmbH & Co. revendique ainsi l'utilisation d'acier inoxydable pour le perturbateur, le tube restant en aluminium, alors que la demande EP1906127 de International Truck propose un tube en aluminium plaqué d'acier inoxydable en face interne, toujours avec un perturbateur en acier inoxydable.

De telles options s'avèrent toutefois trop onéreuses pour constituer une réalisation tout à fait satisfaisante au plan industriel.

### Problème posé

L'invention vise à optimiser le choix des matériaux ou tôles de brasage en alliage d'aluminium destiné(e)s à la réalisation des tubes d'échangeur à perturbateur brasé pour améliorer leur comportement dans un environnement corrosif sévère tel que celui créé par la recirculation des gaz d'échappement de véhicule automobile, sans surplus de matière utilisée ni d'encombrement ou de poids notable et autorisant des conditions de fabrication à partir des tôles de brasage au moins équivalentes, du point de vue de la facilité de mise en oeuvre et du coût, aux solutions de l'art antérieur.

### Objet de l'invention

L'invention a pour objet un ensemble de deux tôles de brasage, la première étant constituée d'un alliage de la série AA3xxx plaqué sur une face d'un alliage de la série AA1xxx, et la deuxième d'un alliage d'aluminium de la série AA3xxx plaqué sur ses deux faces d'un alliage de la série AA4xxx, les deux tôles étant assemblées entre elles par brasage, de façon à former un canal fermé, ou tube, à perturbateur interne, dans lequel circulent des gaz d'échappement, notamment de véhicule automobile, seuls ou associés à un autre fluide, typiquement de l'air, la face du canal exposée à ces gaz ou à ce mélange étant la face revêtue de l'alliage 1xxx de la première tôle formant canal, la deuxième formant perturbateur interne, le canal étant revêtu, sur sa face externe, d'une couche de placage en alliage de la série AA4xxx.

Selon un mode préférentiel, la deuxième tôle de brasage est constituée d'un alliage d'aluminium de composition (% en poids) :
Si : 0,3 - 1,0 Fe < 1,0 Cu : 0,3 - 1,0 Mn : 0,3 - 2,0 Mg : 0,3 - 3,0 Zn < 6,0 Ti < 0,1 Zr < 0,3 Cr < 0,3 Ni < 2,0 Co < 2,0 Bi < 0,5 Y < 0,5 autres éléments < 0,05 chacun et 0,15 au total, reste aluminium,
plaqué sur ses deux faces d'un alliage d'aluminium de brasage contenant de 4 à 15% de silicium et de 0,01 à 0,5% de l'un au moins des éléments Ag, Be, Bi, Ce, La, Pb, Pd, Sb, Y ou de Mischmetall, lesdites deux tôles étant assemblées entre elles par brasage sans flux sous atmosphère protectrice.

Selon un mode de réalisation encore plus préférentiel, la deuxième tôle formant perturbateur est constituée d'un alliage d'aluminium de composition (% en poids) :
Si : 0,3 - 1,0 Fe < 0,5 Cu : 0,35 - 1,0 Mn : 1 ,0 - 2,0 Mg: 0,35-0,7 Zn < 0,2 Ti < 0,1 Zr < 0,3 Cr < 0,3 Ni < 1,0 Co < 1,0 Bi < 0,5 Y < 0,5 autres éléments < 0,05 chacun et 0,15 au total, reste aluminium,
plaqué sur ses deux faces d'un alliage d'aluminium de brasage contenant de 4 à 15% de silicium et de 0,01 à 0,5% de l'un au moins des éléments Ag, Be, Bi, Ce, La, Pb, Pd, Sb, Y ou de Mischmetall, lesdites deux tôles étant toujours assemblées entre elles par brasage sans flux sous atmosphère protectrice.

Par ailleurs, la première tôle de brasage, formant canal ou tube, peut être munie, sur sa face extérieure, d'ailettes, ou intercalaires, elles-mêmes réalisées à partir d'une tôle d'âme en alliage d'aluminium de composition (% en poids) :
Si : 0,3 - 1,0 Fe < 1,0 Cu : 0,3 - 1,0 Mn : 0,3 - 2,0 Mg : 0,3 - 3,0 Zn < 6,0 Ti < 0,1 Zr < 0,3 Cr < 0,3 Ni < 2,0 Co < 2,0 Bi < 0,5 Y < 0,5 autres éléments < 0,05 chacun et 0,15 au total, reste aluminium, revêtue sur ses deux faces d'un alliage d'aluminium de brasage contenant de 4 à 15% de silicium et de 0,01 à 0,5% de l'un au moins des éléments Ag, Be, Bi, Ce, La, Pb, Pd, Sb, Y ou de Mischmetall, et assemblées sur le canal ou tube par brasage sans flux sous atmosphère protectrice.

Préférentiellement, lesdites ailettes, ou intercalaires sont réalisées à partir d'une tôle d'âme en alliage d'aluminium de composition (% en poids) :
Si: 0,3 - 1,0 Fe < 0,5 Cu: 0,35 - 1,0 Mn: 1,0 - 2,0 Mg: 0,35 - 0,7 Zn < 0,2 Ti < 0,1 Zr < 0,3 Cr < 0,3 Ni < 1,0 Co < 1,0 Bi < 0,5 Y < 0,5 autres éléments < 0,05 chacun et 0,15 au total, reste aluminium, revêtue sur ses deux faces d'un alliage d'aluminium de brasage contenant de 4 à 15% de silicium et de 0,01 à 0,5% de l'un au moins des éléments Ag, Be, Bi, Ce, La, Pb, Pd, Sb, Y ou de Mischmetall, et sont assemblées sur le canal ou tube par brasage sans flux sous atmosphère protectrice.

Selon une autre variante, la tôle de brasage formant canal ou tube est revêtue sur la face externe dudit canal ou tube d'une couche de placage en alliage de la série AA4xxx et munie, sur cette couche, d'ailettes, ou intercalaires, assemblées par brasage.

En outre, le canal ou tube peut être réalisé à partir d'une tôle d'âme en alliage d'aluminium de composition (% en poids) :
Si : 0,3 - 1,0 Fe < 1,0 Cu: 0,3 - 1,0 Mn : 0,3 - 2,0 Mg: 0,3 - 3,0 Zn < 6,0 Ti < 0,1 Zr < 0,3 Cr < 0,3 Ni < 2,0 Co < 2,0 Bi < 0,5 Y < 0,5 autres éléments < 0,05 chacun et 0,15 au total, reste aluminium, plaqué sur sa face externe d'un alliage d'aluminium de brasage contenant de 4 à 15% de silicium et de 0,01 à 0,5% de l'un au moins des éléments Ag, Be, Bi, Ce, La, Pb, Pd, Sb, Y ou de Mischmetall, et muni, sur cette couche, d'ailettes, ou intercalaires, assemblées par brasage sans flux sous atmosphère protectrice.

Encore préférentiellement, le canal ou tube peut être réalisé à partir d'une tôle d'âme en alliage d'aluminium de composition (% en poids) :
Si: 0,3 - 1,0 Fe < 0,5 Cu: 0,35 - 1,0 Mn: 1,0 - 2,0 Mg: 0,35 - 0,7 Zn < 0,2 Ti < 0,1 Zr < 0,3 Cr < 0,3 Ni < 1,0 Co < 1,0 Bi < 0,5 Y < 0,5 autres éléments < 0,05 chacun et 0,15 au total, reste aluminium, plaqué sur sa face externe d'un alliage d'aluminium de brasage contenant de 4 à 15% de silicium et de 0,01 à 0,5% de l'un au moins des éléments Ag, Be, Bi, Ce, La, Pb, Pd, Sb, Y ou de Mischmetall, et muni, sur cette couche, d'ailettes, ou intercalaires, assemblées par brasage sans flux sous atmosphère protectrice.

Enfin, ces tôles de brasage, peuvent être avantageusement utilisées pour la constitution de tubes à perturbateur d'un échangeur thermique, et notamment du type connu sous l'appellation EGRC (Exhaust Gas Recirculation Cooler), dans lequel ne circule que du gaz d'échappement de véhicule automobile ou encore du type connu sous l'appellation RAS (Refroidisseur d'Air de Suralimentation, en anglais CAC « Charged Air Cooler ») en boucle EGR (Exhaust Gas Recirculation), dans lequel circule un mélange d'air frais et de gaz d'échappement de véhicule automobile. L'invention porte d'ailleurs également sur ce type de tube d'échangeur thermique dans lequel circulent des gaz d'échappement, notamment de véhicule automobile, seuls ou associés à un autre fluide, typiquement de l'air, réalisé à partir desdites tôles de brasage ainsi que sur un échangeur thermique comportant au moins un tube de ce type.

### Description des figures

La figure 1 représente, une tôle de brasage à trois couches, la tôle d'âme portant le repère 2 et l'alliage de brasage (appelé encore couche de placage), présent sur chacune des faces de l'âme, le repère 1.
La figure 2 représente schématiquement un tube 1 à perturbateur 3, une ailette ou un intercalaire (non représenté(e), extérieur(e) au tube) pouvant être assemblé sur la face externe du tube par brasage. De la même façon, le perturbateur est assemblé sur la face interne du tube par brasage. A cette fin, les 2 faces du tubes sont revêtues d'un matériau dit de brasage ou de placage généralement de la série AA4xxxx (repère 2 sur la figure).
La figure 3 représente schématiquement la tôle de brasage utilisée pour le tube de la figure 2, mais où a été intercalé, entre l'alliage d'âme du tube et son revêtement interne en alliage de brasage de la série AA4xxx, un placage intermédiaire en alliage de la série AA1xxx ou AA7xxx.
   L'âme du tube porte le repère 3, le revêtement extérieur en alliage de la série AA4xxx le repère 4, le revêtement intérieur également en alliage de la série AA4xxx le repère 1 et le revêtement intermédiaire en alliage de la série AA1xxx ou AA7xxx le repère 2.
La figure 4 représente schématiquement un tube 1 à perturbateur 4 selon l'invention, ledit perturbateur étant lui-même constitué d'une tôle de brasage plaquée, et le tube 1 étant aussi réalisé à partir d'une tôle de brasage constituée d'une tôle d'âme, typiquement en alliage de la série AA3xxx, revêtue sur la face interne du tube d'une couche 3 de placage en alliage de la série AA1xxx et sur la face externe d'une couche 2 d'alliage de brasage de la série AA4xxx pour recevoir par brasage des ailettes non revêtues.

### Description de l'invention

L'invention consiste en un choix judicieux des alliages d'aluminium constituant les tôles de brasage utilisées pour la réalisation de canaux ou tubes d'échangeur thermique avec perturbateur, plus particulièrement adaptés aux tubes d'échangeurs soumis à un environnement corrosif sévère tels que notamment les tubes subissant une recirculation des gaz d'échappement de véhicule automobile.

Le perturbateur positionné à l'intérieur du tube est destiné précisément à perturber la circulation du fluide interne et à augmenter l'échange thermique avec le milieu extérieur.

Ce perturbateur consiste typiquement, en tout cas dans le cadre de l'invention, en une tôle ondulée dans sa longueur, semblable à une ailette ou intercalaire d'échangeur, cette réalisation étant bien connue de l'homme du métier, comme rappelé au paragraphe « Etat de la technique ».

Toujours dans le cadre des éléments considérés pour l'invention, tant le tube que le perturbateur sont réalisés par pliage et assemblage, selon les moyens habituels connus de l'homme du métier, de tôles de brasage.

Le perturbateur est assemblé à l'intérieur du tube par brasage. A cette fin, la tôle de brasage constituant le perturbateur consiste en une tôle d'âme en alliage de la série AA3xxx, revêtue, sur ses deux faces d'une couche de placage en alliage de brasage de la série AA4xxx.

Le tube, quant à lui est constitué d'une autre tôle de brasage, consistant en une tôle d'âme en alliage de la série AA3xxx, et l'invention consiste notamment à munir sa face interne d'un revêtement par placage et à choisir à cette fin un alliage de la série AA1xxx.

Ce même tube est revêtu, selon l'invention, sur sa face externe d'une couche de placage en alliage de la série AA4xxx pour permettre le brasage, sur ladite face extérieure du tube, d'ailettes, encore appelées intercalaires, non revêtues, ou éventuellement du tube sur lui-même.

Le placage des différents alliages constituant les tôles de brasage peut être typiquement réalisé par colaminage, méthode tout à fait courante et connue de l'homme du métier.

Par ailleurs, le brevet EP 1687456 B1 de la demanderesse décrit une composition de tôle de brasage du type tôle d'âme en alliage de la série AA3xxx revêtue sur une ou deux faces d'un alliage de brasage de la série AA4xxx permettant le brasage sans flux sous atmosphère contrôlée (encore dite protectrice) typiquement d'azote et/ou argon, dans un four utilisé de façon standard pour la mise en oeuvre du procédé Nocolok^{®}.

Cette tôle de brasage est constituée d'une tôle d'âme en alliage d'aluminium de composition (% en poids) :
Si : 0,3 - 1,0 Fe < 1,0 Cu : 0,3 - 1,0 Mn : 0,3 - 2,0 Mg : 0,3 - 3,0 Zn < 6,0 Ti < 0,1 Zr < 0,3 Cr < 0,3 Ni < 2,0 Co < 2,0 Bi < 0,5 Y < 0,5 autres éléments < 0,05 chacun et 0,15 au total, reste aluminium,
revêtue sur au moins une face d'un alliage d'aluminium de brasage contenant de 4 à 15% de silicium et de 0,01 à 0,5% de l'un au moins des éléments Ag, Be, Bi, Ce, La, Pb, Pd, Sb, Y ou de Mischmetall.

Une composition encore préférentielle pour l'alliage d'âme est telle que ci-après (% en poids) :
Si : 0,3 - 1,0 Fe < 0,5 Cu : 0,35 - 1,0 Mn : 1,0 - 2,0 Mg : 0,35 - 0,7 Zn < 0,2 Ti < 0,1 Zr < 0,3 Cr < 0,3 Ni < 1,0 Co < 1,0 Bi < 0,5 Y < 0,5 autres éléments < 0,05 chacun et 0,15 au total, reste aluminium, le(s) revêtement(s) demeurant inchangé(s).

Ce premier type de tôle, et encore plus avantageusement le second, revêtu sur ces deux faces, est retenu, selon deux modes préférentiels de l'invention, pour la réalisation du perturbateur, qui peut ainsi être assemblé par brasage sans flux sous atmosphère protectrice à l'intérieur du tube, permettant ainsi un gain de coût notable et évitant tout risque de problème lié à l'entrainement éventuel de flux résiduel dans le circuit.

De même ces deux compositions d'alliage, dans la même configuration de revêtement sur deux faces, peuvent être avantageusement utilisées pour la réalisation des ailettes ou intercalaires et leur assemblage par brasage sans flux sur la face extérieure du tube, ou canal.

Selon l'invention, revêtir l'extérieur du tube, ou canal, par placage, d'une couche d'alliage de brasage de la série AA4xxx permet également d'y assembler par brasage des ailettes ou intercalaires standard, plaqué(e)s ou non. En outre, les deux types de tôle, selon les compositions précitées, peuvent être avantageusement utilisés pour la réalisation du tube ou canal lui-même, toujours revêtu sur sa face interne d'une couche de placage en alliage de la série AA1xxx et sur sa face externe de l'alliage de brasage de la série AA4xxx permettant le brasage sans flux sous atmosphère protectrice des ailettes standard.

L'invention présente bien sûr un grand intérêt notamment pour les échangeurs thermiques comportant ce type de tubes et plus particulièrement les échangeurs thermiques du type connu de l'homme du métier sous l'appellation EGRC (Exhaust Gas Recirculation Cooler), dans lequel ne circule que du gaz d'échappement de véhicule automobile ou encore du type connu sous l'appellation RAS (Refroidisseur d'Air de Suralimentation, en anglais CAC « Charged Air Cooler ») en boucle EGR (Exhaust Gas Recirculation), dans lesquels circule un mélange d'air frais et de gaz d'échappement de véhicule automobile, milieux dans les deux cas particulièrement corrosifs.

Dans ses détails, l'invention sera mieux comprise à l'aide des exemples ci-après, qui n'ont toutefois pas de caractère limitatif.

### Exemples

On a coulé plusieurs plaques d'alliage d'âme 3916 et d'alliage de brasage AA4045 ainsi que des plaques d'alliage AA1050 ainsi qu'une plaque de chaque alliage 3920 et 4945.

L'alliage 3916 avait la composition suivante (% en poids):
Si : 0,18 Fe: 0,15 Cu : 0,65 Mn : 1,35 Ti : 0.08 autres éléments < 0,05 chacun et 0,15 au total, reste aluminium,

L'alliage 3920 avait la composition suivante (% en poids):
Si : 0,5 Fe:0,15 Cu : 0,5 Mn : 1,65 Mg : 0,5 Ti : 0.08 autres éléments < 0,05 chacun et 0,15 au total, reste aluminium,

L'alliage 4945 est un alliage AA4045 contenant en outre 0,15% de Bi

Des assemblages ont été réalisés à partir de ces plaques de façon à obtenir, en fin de transformation, les pourcentages de placage (en % de l'épaisseur totale) indiqués au tableau 1 ci-après.

Ces assemblages ont été laminés à chaud, puis à froid, de façon à produire des bandes plaquées d'épaisseur 0.40 mm pour les tubes et 0.20 mm pour les perturbateurs. Ces bandes ont ensuite été soumises à un traitement de restauration de 2 h à 280°C après montée en température à une vitesse de 45°C/h.

Des maquettes de tubes munis de perturbateurs brasés selon le procédé Nocolok^{®} pour les références 1 à 3 du tableau 1 et sans flux pour la référence 4, avec une phase de montée en température jusqu'à 600°C à une vitesse d'environ 40°C/min, un maintien de 2 min à 600°C et une descente à environ 50°C/min, le tout sous balayage d'azote avec un débit de 8 L/min.

Les configurations testées figurent au tableau 1 ci-dessous.

La configuration 1 correspond à un tube simple en alliage d'âme 3916 revêtu sur deux faces d'alliage de brasage AA4045 et d'un perturbateur en alliage AA3003.

La configuration 2 est identique à l'exception de l'addition d'une couche intermédiaire d'alliage AA1050 entre l'âme et l'alliage de brasage intérieur AA4045. La configuration 3, selon l'invention, utilise un tube en alliage d'âme 3916 revêtu extérieurement d'un alliage de brasage AA4045 et intérieurement d'un alliage de brasage AA1050 et un perturbateur en alliage d'âme 3916 revêtu sur deux faces d'un alliage de brasage AA4045.

Pour ces trois cas, le brasage a été réalisé selon le procédé Nocolok^{®}, avec flux.

La configuration 4, selon l'invention, utilise un tube en alliage d'âme 3916 revêtu extérieurement d'un alliage de brasage AA4045 et intérieurement d'un alliage AA1050 et un perturbateur en alliage d'âme AA3920 revêtu sur deux faces d'un alliage de brasage 4945 (contenant 0.15% de Bi) selon les compositions les plus préférentielles précitées. Dans ce cas, le brasage a été réalisé sans flux sous atmosphère protectrice conformément au brevet de la demanderesse précité.

**Tableau 1 : Configuration des maquettes testées en corrosion.**

| | Tube | Perturbateur |
|---|---|---|
| Ref. | Matière | Matière |
| 1 | 4045 7,5% / 3916 / 4045 7,5% | 3003 |
| 2 | 4045 7,5% / 3916 / 1050 15% / 4045 7,5% | 3003 |
| 3 | 4045 10 % / 3916 / 1050 10% | 4045 10% / 3916 / 4045 10% |
| 4 | 4045 10% / 3916 / 1050 10% | 4945 10% / 3920 / 4945 10% |

La résistance à la corrosion des tubes a été éprouvée à l'aide d'un test de corrosion alternant immersion et émersion visant à reproduire les conditions auxquelles sont soumis les échangeurs de type RAS (Refroidisseur d'Air de Suralimentation) en boucle EGR (Exhaust Gas Recirculation) basse pression. Les conditions détaillées du test utilisé sont décrites dans les tableaux 2 et 3 ci-dessous.

En pratique, le cycle d'essais consiste en deux répétitions des étapes 1, 2 et 3 puis trois répétitions des étapes 4, 5 et 6 et l'ensemble est répété quatre mille fois.

**Tableau 2 : Paramètres du test de corrosion.**

| Répétions | | Etape | Liquide | Durée | Température | Position |
|---|---|---|---|---|---|---|
| x 4000 | x2 | 1 | L1 | 15 s | ambiante | Immersion |
| | | 2 | Air | 45 s | ambiante | Emersion |
| | | 3 | Air | 15 min | 170°C | Emersion |
| | x3 | 4 | L1 | 15 s | ambiante | Immersion |
| | | 5 | Air | 45 s | ambiante | Emersion |
| | | 6 | Air | 15 min | ambiante | Emersion |

**Tableau 3 : Composition de L1 utilisé pour le test de corrosion (en ppm).**

| Ions Sulfate | Ions Nitrate | Acide acétique | Acide formique | Acide propanoïque | Ions Chlorure | pH |
|---|---|---|---|---|---|---|
| 320 | 52 | 590 | 3167 | 474 | 20 | 2.5 |

Les ions sulfate ont été introduits sous forme d'acide sulfurique, les ions nitrate sous forme d'acide acétique et les ions chlorure sous forme d'acide chlorhydrique.

Pour chaque configuration testée, la qualité de tenue en corrosion a été appréciée par une observation métallographique en coupe du tube et du perturbateur.

Les résultats obtenus à partir des caractérisations réalisées sur les prélèvements à 300 h sont résumés dans le Tableau 4 ci-après.

**Tableau 4 : Caractérisation du test de corrosion après 300h.**

| Ref. | Tube | Perturbateur | Joints tube-perturbateur |
|---|---|---|---|
| 1 | Corrosion très importante, intergranulaire. Quelques fuites | Corrosion par piqûres par endroits. Pas de corrosion intergranulaire | Faible corrosion. Quelques joints séparés |
| 2 | Corrosion importante intergranulaire. Quelques fuites | Corrosion par piqûres par endroits. Pas de corrosion intergranulaire | Faible corrosion. Quelques joints séparés |
| 3 | Corrosion très rare, très peu profonde. Pas de corrosion intergranulaire | Corrosion Intergranulaire | Faible corrosion Pas de joints séparés |
| 4 | Corrosion très rare, très peu profonde. Pas de corrosion intergranulaire | Corrosion Intergranulaire | Faible corrosion Pas de joints séparés |

Les tubes des configurations 1 et 2 présentent une corrosion importante pouvant aller jusqu'au perçage ainsi qu'à une détérioration notable de certains joints de brasage liant le tube au perturbateur. Les perturbateurs, non plaqués, associés à ce type de tube sont quant à eux peu corrodés.

Au contraire, les configurations 3 et 4, selon l'invention, conduisent à une très faible corrosion du tube, souvent limitée au placage. La corrosion des joints de brasage est également limitée. Les perturbateurs associés à ce type de tube sont quant à eux sensiblement corrodés. Cette situation est toutefois jugée nettement plus favorable.

En effet, un seul perçage sur un tube entraine une fuite du circuit complet de l'échangeur thermique. Une fuite sur un perturbateur entraine une baisse de la qualité d'échange thermique de l'échangeur.

On comprend donc aisément qu'il est plus important de maintenir l'intégrité du tube que celle du perturbateur.

## Revendications

1. Ensemble de deux tôles de brasage **caractérisé en ce que** :
- la première tôle est constituée d'un alliage de la série AA3xxx plaqué sur une face d'un alliage de la série AA1xxx,
- la deuxième tôle est constituée d'un alliage d'aluminium de la série AA3xxx plaqué sur ses deux faces d'un alliage de la série AA4xxx,
- les deux tôles sont assemblées entre elles par brasage de façon à former un canal fermé, ou tube, à perturbateur interne, dans lequel circulent des gaz d'échappement, notamment de véhicule automobile, seuls ou associés à un autre fluide, typiquement de l'air,
- la face du canal exposée à ces gaz, ou à ce mélange, est la face revêtue de l'alliage 1xxx de la première tôle formant canal, la deuxième formant perturbateur interne,
- le canal est revêtu, sur sa face externe, d'une couche de placage en alliage de la série AA4xxx.

2. Ensemble de deux tôles de brasage selon la revendication 1, **caractérisé en ce que** la deuxième tôle de brasage est constituée d'un alliage d'aluminium de composition (% en poids) :
Si : 0,3 - 1,0 Fe < 1,0 Cu : 0,3 - 1,0 Mn : 0,3 - 2,0 Mg : 0,3 - 3,0 Zn < 6,0 Ti < 0,1 Zr < 0,3 Cr < 0,3 Ni < 2,0 Co < 2,0 Bi < 0,5 Y < 0,5 autres éléments < 0,05 chacun et 0,15 au total, reste aluminium,
plaqué sur ses deux faces d'un alliage d'aluminium de brasage contenant de 4 à 15% de silicium et de 0,01 à 0,5% de l'un au moins des éléments Ag, Be, Bi, Ce, La, Pb, Pd, Sb, Y ou de Mischmetall,
lesdites deux tôles étant assemblées entre elles par brasage sans flux sous atmosphère protectrice.

3. Ensemble de deux tôles de brasage selon la revendication 2, **caractérisé en ce que** la deuxième tôle est constituée d'un alliage d'aluminium de composition (% en poids) :
Si : 0,3 - 1,0 Fe < 0,5 Cu : 0,35 - 1,0 Mn: 1,0 - 2,0 Mg: 0,35 - 0,7 Zn < 0,2 Ti < 0,1 Zr < 0,3 Cr < 0,3 Ni < 1,0 Co < 1,0 Bi < 0,5 Y < 0,5 autres éléments < 0,05 chacun et 0,15 au total, reste aluminium,
plaqué sur ses deux faces d'un alliage d'aluminium de brasage contenant de 4 à 15% de silicium et de 0,01 à 0,5% de l'un au moins des éléments Ag, Be, Bi, Ce, La, Pb, Pd, Sb, Y ou de Mischmetall,
lesdites deux tôles étant assemblées entre elles par brasage sans flux sous atmosphère protectrice.

4. Ensemble de deux tôles de brasage selon l'une des revendications 1 à 3, **caractérisé en ce qu'**il est muni, sur la face extérieure de la première tôle formant canal, d'ailettes, ou intercalaires, elles-mêmes réalisées à partir d'une tôle d'âme en alliage d'aluminium de composition (% en poids) :
Si : 0,3 - 1,0 Fe < 1,0 Cu : 0,3 - 1,0 Mn : 0,3 - 2,0 Mg : 0,3 - 3,0 Zn < 6,0 Ti < 0,1 Zr < 0,3 Cr < 0,3 Ni < 2,0 Co < 2,0 Bi < 0,5 Y < 0,5 autres éléments < 0,05 chacun et 0,15 au total, reste aluminium,
plaqué sur ses deux faces d'un alliage d'aluminium de brasage contenant de 4 à 15% de silicium et de 0,01 à 0,5% de l'un au moins des éléments Ag, Be, Bi, Ce, La, Pb, Pd, Sb, Y ou de Mischmetall, et assemblées sur le canal par brasage sans flux sous atmosphère protectrice.

5. Ensemble de deux tôles de brasage selon l'une des revendications 1 à 4, **caractérisé en ce qu'**il est muni, sur la face extérieure du canal, d'ailettes, ou intercalaires, elles-mêmes réalisées à partir d'une tôle d'âme en alliage d'aluminium de composition (% en poids) :
Si : 0,3 - 1,0 Fe < 0,5 Cu : 0,35 - 1,0 Mn: 1,0 - 2,0 Mg: 0,35 - 0,7 Zn < 0,2 Ti < 0,1 Zr < 0,3 Cr < 0,3 Ni < 1,0 Co < 1,0 Bi < 0,5 Y < 0,5 autres éléments < 0,05 chacun et 0,15 au total, reste aluminium, plaqué sur ses deux faces d'un alliage d'aluminium de brasage contenant de 4 à 15% de silicium et de 0,01 à 0,5% de l'un au moins des éléments Ag, Be, Bi, Ce, La, Pb, Pd, Sb, Y ou de Mischmetall, et assemblées sur le canal par brasage sans flux sous atmosphère protectrice.

6. Ensemble de deux tôles de brasage selon l'une des revendications 1 à 3, **caractérisé en ce que** le canal est revêtu, sur sa face externe, d'une couche de placage en alliage de la série AA4xxx et muni, sur cette couche, d'ailettes, ou intercalaires, assemblées par brasage.

7. Ensemble de deux tôles de brasage selon l'une des revendications 1 à 3, **caractérisé en ce que** le canal est réalisé à partir d'une tôle d'âme en alliage d'aluminium de composition (% en poids) :
Si : 0,3 - 1,0 Fe < 1,0 Cu : 0,3 - 1,0 Mn : 0,3 - 2,0 Mg : 0,3 - 3,0 Zn < 6,0 Ti < 0,1 Zr < 0,3 Cr < 0,3 Ni < 2,0 Co < 2,0 Bi < 0,5 Y < 0,5 autres éléments < 0,05 chacun et 0,15 au total, reste aluminium,
plaqué sur sa face externe d'un alliage d'aluminium de brasage contenant de 4 à 15% de silicium et de 0,01 à 0,5% de l'un au moins des éléments Ag, Be, Bi, Ce, La, Pb, Pd, Sb, Y ou de Mischmetall, et muni, sur cette couche, d'ailettes, ou intercalaires, assemblées par brasage sans flux sous atmosphère protectrice.

8. Ensemble de deux tôles de brasage selon l'une des revendications 1 à 3, **caractérisé en ce que** le canal est réalisé à partir d'une tôle d'âme en alliage d'aluminium de composition (% en poids) :
Si : 0,3 - 1,0 Fe < 0,5 Cu : 0,35 - 1,0 Mn: 1,0 - 2,0 Mg: 0,35 - 0,7 Zn < 0,2 Ti < 0,1 Zr < 0,3 Cr < 0,3 Ni < 1,0 Co < 1,0 Bi < 0,5 Y < 0,5 autres éléments < 0,05 chacun et 0,15 au total, reste aluminium,
plaqué sur sa face externe d'un alliage d'aluminium de brasage contenant de 4 à 15% de silicium et de 0,01 à 0,5% de l'un au moins des éléments Ag, Be, Bi, Ce, La, Pb, Pd, Sb, Y ou de Mischmetall, et muni, sur cette couche, d'ailettes, ou intercalaires, assemblées par brasage sans flux sous atmosphère protectrice.

9. Ensemble de deux tôles de brasage selon l'une des revendications 1 à 8, **caractérisé en ce qu'**il entre dans la constitution d'un échangeur thermique.

10. Ensemble de deux tôles de brasage selon la revendication 9 **caractérisé en ce qu'**il entre dans la constitution d'un échangeur thermique du type connu sous l'appellation EGRC (Exhaust Gas Recirculation Cooler) dans lequel ne circule que du gaz d'échappement de véhicule automobile.

11. Ensemble de deux tôles de brasage selon la revendication 9, **caractérisé en ce qu'**il entre dans la constitution d'un échangeur thermique du type connu sous l'appellation RAS (Refroidisseur d'Air de Suralimentation, en anglais CAC « Charged Air Cooler ») en boucle EGR (Exhaust Gas Recirculation), dans lequel circule un mélange d'air frais et de gaz d'échappement de véhicule automobile.

12. Tube d'échangeur thermique dans lequel circulent des gaz d'échappement, notamment de véhicule automobile, seuls ou associés à un autre fluide, typiquement de l'air, réalisé à partir d'un ensemble de tôles de brasage selon l'une des revendications 1 à 8.

13. Echangeur thermique **caractérisé en ce qu'**il comporte au moins un tube selon la revendication 12.

## Patentansprüche

1. Anordnung von zwei Lötblechen, **dadurch gekennzeichnet,**
- **dass** das erste Blech aus einer Legierung der Serie AA3xxx besteht, die auf einer Seite mit einer Legierung der Serie AA1xxx plattiert ist,
- **dass** das zweite Blech aus einer Aluminiumlegierung der Serie AA3xxx besteht, die auf beiden Seiten mit einer Legierung der Serie AA4xxx plattiert ist,
- **dass** die beiden Bleche durch Löten so miteinander verbunden werden,
- **dass** ein geschlossener Kanal, oder ein Rohr, mit innenliegendem Turbulator gebildet wird, durch die Abgase, insbesondere eines Kraftfahrzeugs, allein oder in Verbindung mit einem anderen Fluid strömen,
- **dass** die Seite des Kanals, die diesen Gasen oder diesem Gemisch ausgesetzt ist, diejenige Seite ist, die mit der Legierung 1xxx des ersten Blechs, welches den Kanal bildet, beschichtet ist, wobei das zweite Blech den innenliegenden Turbulator bildet,
- **dass** der Kanal auf seiner Außenseite mit einer Plattierungsschicht aus einer Legierung der Serie AA4xxx überzogen.

2. Anordnung von zwei Lötblechen nach Anspruch 1, **dadurch gekennzeichnet, dass** das zweite Lötblech aus einer Aluminiumlegierung mit folgender Zusammensetzung (in Gewichtsprozent) besteht:
Si: 0,3 -1,0 Fe < 1,0 Cu : 0,3 - 1,0 Mn: 0,3 - 2,0 Mg: 0,3 - 3,0 Zn < 6,0 Ti < 0,1 Zr < 0,3 Cr < 0,3 Ni < 2,0 Co < 2,0 Bi < 0,5 Y < 0,5 **w**eitere Elemente jeweils < 0,05 und insgesamt 0,15, Rest Aluminium,
welche auf ihren beiden Seiten mit einer Aluminiumlötlegierung plattiert ist, die 4 bis 15 % Silicium und 0,01 bis 0,5 % mindestens eines der Elemente Ag Be, Bi, Ce, La, Pb, Pd, Sb, Y oder Mischmetall enthält,
wobei die beiden Bleche durch flussmittelfreies Löten unter Schutzatmosphäre miteinander verbunden werden.

3. Anordnung von zwei Lötblechen nach Anspruch 2, **dadurch gekennzeichnet, dass** das zweite Blech aus einer Aluminiumlegierung mit folgender Zusammensetzung (in Gewichtsprozent) besteht:
Si : 0,3 - 1,0 Fe < 0,5 Cu : 0,35 - 1,0 Mn : 1,0 - 2,0 Mg : 0,35 - 0,7 Zn < 0,2 Ti < 0,1 Zr < 0,3 Cr < 0,3 Ni < 1,0 Co < 1,0 Bi < 0,5 Y < 0,5
weitere Elemente jeweils < 0,05 und insgesamt 0,15, Rest Aluminium, welche auf ihren beiden Seiten mit einer Aluminiumlötlegierung plattiert ist, die 4 bis 15 % Silicium und 0,01 bis 0,5 % mindestens eines der Elemente Ag, Be, Bi, Ce, La, Pb, Pd, Sb, Y oder Mischmetall enthält,
wobei die beiden Bleche durch flussmittelfreies Löten unter Schutzatmosphäre miteinander verbunden werden.

4. Anordnung von zwei Lötblechen nach einem der Ansprüche 1 bis 3, **dadurch gekennzeichnet, dass** sie auf der Außenseite des den Kanal bildenden ersten Blechs mit Rippen oder Zwischeneinlagen versehen ist, die ihrerseits hergestellt sind aus einem Kernblech aus Aluminiumlegierung mit folgender Zusammensetzung (in Gewichtsprozent):
Si: 0,3 - 1,0 Fe < 1,0 Cu : 0,3 - 1,0 Mn : 0,3 - 2,0 Mg: 0,3 - 3,0 Zn < 6,0 Ti < 0,1 Zr < 0,3 Cr < 0,3 Ni < 2,0 Co < 2,0 Bi < 0,5 Y < 0,5 **w**
eitere Elemente jeweils < 0,05 und insgesamt 0,15, Rest Aluminium,
welche auf ihren beiden Seiten mit einer Aluminiumlötlegierung plattiert ist, die 4 bis 15 % Silicium und 0,01 bis 0,5 % mindestens eines der Elemente Ag, Be, Bi, Ce, La, Pb, Pd, Sb, Y oder Mischmetall enthält, und die auf dem Kanal durch flussmittelfreies Löten unter Schutzatmosphäre miteinander verbunden werden.

5. Anordnung von zwei Lötblechen nach einem der Ansprüche 1 bis 4, **dadurch gekennzeichnet, dass** sie auf der Außenseite des Kanals mit Rippen oder Zwischeneinlagen versehen ist, die ihrerseits hergestellt sind aus einem Kernblech aus Aluminiumlegierung mit folgender Zusammensetzung (in Gewichtsprozent):
Si : 0,3 - 1,0 Fe < 0,5 Cu : 0,35 - 1,0 Mn : 1,0 - 2,0 Mg : 0,35 - 0,7 Zn < 0,2 Ti < 0,1 Zr < 0,3 Cr < 0,3 Ni < 1,0 Co < 1,0 Bi < 0,5 Y < 0,5
weitere Elemente jeweils < 0,05 und insgesamt 0,15, Rest Aluminium,
welche auf ihren beiden Seiten mit einer Aluminiumlötlegierung plattiert ist, die 4 bis 15 % Silicium und 0,01 bis % mindestens eines der Elemente Ag, Be, Bi, Ce, La, Pb, Pd, Sb, Y oder Mischmetall enthält, und die auf dem Kanal durch flussmittelfreies Löten unter Schutzatmosphäre miteinander verbunden werden.

6. Anordnung von zwei Lötblechen nach einem der Ansprüche 1 bis 3, **dadurch gekennzeichnet, dass** der Kanal auf seiner Außenseite mit einer Plattierungsschicht aus einer Legierung der Serie AA4xxx überzogen und auf dieser Schicht mit zusammengelöteten Rippen oder Zwischeneinlagen versehen ist.

7. Anordnung von zwei Lötblechen nach einem der Ansprüche 1 bis 3, **dadurch gekennzeichnet, dass** der Kanal aus einem Kernblech aus Aluminiumlegierung mit folgender Zusammensetzung (in Gewichtsprozent) hergestellt ist:
Si: 0,3 -1,0 Fe < 1,0 Cu : 0,3 - 1,0 Mn: 0,3 - 2,0 Mg : 0,3 - 3,0 Zn < 6,0 Ti < 0,1 Zr < 0,3 Cr<0,3 Ni<2,0 Co < 2,0 Bi<0,5 Y<0,5
weitere Elemente jeweils < 0,05 und insgesamt 0,15, Rest Aluminium,
welche auf ihrer Außenseite mit einer Aluminiumlötlegierung plattiert ist, die 4 bis 15 % Silicium und 0,01 bis 0,5 % mindestens eines der Elemente Ag, Be, Bi, Ce, La, Pb, Pd, Sb, Y oder Mischmetall enthält, und auf dieser Schicht mit Rippen oder Zwischeneinlagen versehen ist, die durch flussmittelfreies Löten unter Schutzatmosphäre miteinander verbunden werden.

8. Anordnung von zwei Lötblechen nach einem der Ansprüche 1 bis 3, **dadurch gekennzeichnet, dass** der Kanal aus einem Kernblech aus Aluminiumlegierung mit folgender Zusammensetzung (in Gewichtsprozent) hergestellt ist:
Si : 0,3 - 1,0 Fe < 0,5 Cu : 0,35 - 1,0 Mn: 1,0- 2,0 Mg : 0,35 - 0,7 Zn < 0,2 Ti < 0,1 Zr < 0,3 Cr < 0,3 Ni < 1,0 Co < 1,0 Bi < 0,5 Y < 0,5
weitere Elemente jeweils < 0,05 und insgesamt 0,15, Rest Aluminium,
welche auf ihrer Außenseite mit einer Aluminiumlötlegierung plattiert ist, die 4 bis 15 % Silicium und 0,01 bis 0,5 % mindestens eines der Elemente Ag, Be, Bi, Ce, La, Pb, Pd, Sb, Y oder Mischmetall enthält, und auf dieser Schicht mit Rippen oder Zwischeneinlagen versehen ist, die durch flussmittelfreies Löten unter Schutzatmosphäre miteinander verbunden werden.

9. Anordnung von zwei Lötblechen nach einem der Ansprüche 1 bis 8, **dadurch gekennzeichnet, dass** sie Bestandteil eines Wärmetauschers ist.

10. Anordnung von zwei Lötblechen nach Anspruch 9, **dadurch gekennzeichnet, dass** sie Bestandteil eines Wärmetauschers ist, der als EGRC (Exhaust Gas Recirculation Cooler) bekannt ist und nur von Kraftfahrzeugabgasen durchströmt wird.

11. Anordnung von zwei Lötblechen nach Anspruch 9, **dadurch gekennzeichnet, dass** sie Bestandteil eines Wärmetauschers ist, der als RAS (Refroidisseur d'Air de Suralimentation, engl. CAC «Charged Air Cooler») mit Abgasrückführung EGR (Exhaust Gas Recirculation) bekannt ist und von einem Gemisch aus Frischluft und Kraftfahrzeugabgasen durchströmt wird.

12. Wärmetauscherrohr, durch das Abgase, insbesondere eines Kraftfahrzeugs, allein oder in Verbindung mit einem anderen Fluid, typischerweise Luft, strömen und das aus einer Anordnung von Lötblechen nach einem der Ansprüche 1 bis 8 hergestellt ist.

13. Wärmetauscher, **dadurch gekennzeichnet, dass** er mindestens ein Rohr nach Anspruch 12 aufweist.

## Claims

1. Assembly of two brazing sheets, **characterized in that**:
- the first sheet consists of a AA3xxx alloy cladded on one face with an AA1xxx alloy,
- the second sheet consists of an AA3xxx aluminum alloy cladded on both faces with an AA4xxx alloy,
- the two sheets are assembled to each other by brazing, so as to form a closed channel or tube with an internal turbulator, inside which exhaust gases flow, particularly exhaust gases from an automobile vehicle, alone or in association with another fluid, typically air,
- the face of the channel exposed to these gases or to this mix is the face coated with the 1xxx alloy in the first sheet forming the channel, the second forming the internal turbulator,
- the channel is coated, on its external face, with a cladding layer made from an AA4xxx alloy.

2. Assembly of two brazing sheets, according to claim 1, **characterized in that** the second brazing sheet consists of an aluminum alloy with the following composition (% by weight):
Si: 0.3 -1.0 Fe < 1.0 Cu: 0.3 -1.0 Mn: 0.3 - 2.0 Mg: 0.3 - 3.0 Zn < 6.0 Ti < 0.1 Zr < 0.3 Cr < 0.3 Ni < 2.0 Co < 2.0 Bi < 0.5 Y < 0.5, other elements < 0.05 each and 0.15 in total, the remainder being aluminum,
cladded on its two faces with an aluminum brazing alloy containing 4 to 15% of silicon and 0.01 to 0.5% of at least one of the elements Ag, Be, Bi, Ce, La, Pb, Pd, Sb, Y or Mischmetall, said two sheets being assembled to each other by fluxless brazing under a protective atmosphere.

3. Assembly of two brazing sheets, according to claim 2, **characterized in that** the second sheet consists of an aluminum alloy with the following composition (% by weight): Si: 0.3 -1.0 Fe < 0.5 Cu: 0.35-1.0 Mn: 1.0-2.0 Mg: 0.35 - 0.7 Zn < 0.2 Ti < 0.1 Zr < 0.3 Cr < 0.3 Ni < 1.0 Co < 1.0 Bi < 0.5 Y < 0.5 other elements < 0.05 each and 0.15 in total, the remainder being aluminum,
cladded on its two faces with an aluminum brazing alloy containing 4 to 15% of silicon and 0.01 to 0.5% of at least one of the elements Ag, Be, Bi, Ce, La, Pb, Pd, Sb, Y or Mischmetall, said two sheets being assembled together by fluxless brazing under a protective atmosphere.

4. Assembly of two brazing sheets, according to one of claims 1 to 3, **characterized in that** it is provided with fins or separators on the external face of the first sheet forming the channel, themselves made from an aluminum alloy core sheet with the following composition (% by weight):
Si: 0.3 -1.0 Fe < 1.0 Cu: 0.3 -1.0 Mn: 0.3 - 2.0 Mg: 0.3 - 3.0 Zn < 6.0 Ti < 0.1 Zr < 0.3 Cr < 0.3 Ni < 2.0 Co < 2.0 Bi < 0.5 Y < 0.5 other elements < 0.05 each and 0.15 in total, the remainder being aluminum, cladded on its two faces with an aluminum brazing alloy containing 4 to 15% of silicon and 0.01 to 0.5% of at least one of the elements Ag, Be, Bi, Ce, La, Pb, Pd, Sb, Y or Mischmetall, and assembled on the channel by fluxless brazing under a protective atmosphere.

5. Assembly of two brazing sheets, according to one of claims 1 to 4, **characterized in that** it is provided with fins or separators on the external face of the first sheet forming the channel, themselves made from an aluminum alloy core sheet with the following composition (% by weight):
Si: 0.3-1.0 Fe < 0.5 Cu: 0.35 -1.0 Mn: 1.0 - 2.0 Mg: 0.35 - 0.7 Zn < 0.2 Ti < 0.1 Zr < 0.3 Cr < 0.3 Ni < 1.0 Co < 1.0 Bi < 0.5 Y < 0.5 other elements < 0.05 each and 0.15 in total, the remainder being aluminum, cladded on its two faces with an aluminum brazing alloy containing 4 to 15% of silicon and 0.01 to 0.5% of at least one of the elements Ag, Be, Bi, Ce, La, Pb, Pd, Sb, Y or Mischmetall, and assembled on the channel by fluxless brazing under a protective atmosphere.

6. Assembly of two brazing sheets, according to one of claims 1 to 3, **characterized in that** the channel is coated on its external face with a cladding layer made from an AA4xxx alloy and fitted with fins or separators on this coat, assembled by brazing.

7. Assembly of two brazing sheets, according to one of claims 1 to 3, **characterized in that** the channel is made from a core sheet made from an aluminum alloy with the following composition (% by weight):
Si: 0.3 -1.0 Fe < 1.0 Cu: 0.3 -1.0 Mn: 0.3 - 2.0 Mg: 0.3 - 3.0 Zn < 6.0 Ti < 0.1 Zr < 0.3 Cr < 0.3 Ni < 2.0 Co < 2.0 Bi < 0.5 Y < 0.5 other elements < 0.05 each and 0.15 in total, the remainder being aluminum,
cladded on its external face with an aluminum brazing alloy containing 4 to 15% of silicon and 0.01 to 0.5% of at least one of the elements Ag, Be, Bi, Ce, La, Pb, Pd, Sb, Y or Mischmetall, and fitted with fins or separators on this layer assembled by fluxless brazing under a protective atmosphere.

8. Assembly of two brazing sheets, according to one of claims 1 to 3, **characterized in that** the channel is made from a core sheet made from an aluminum alloy with the following composition (% by weight):
Si: 0.3-1.0 Fe < 0.5 Cu: 0.35 -1.0 Mn: 1.0 - 2.0 Mg: 0.35 - 0.7 Zn < 0.2 Ti < 0.1 Zr < 0.3 Cr < 0.3 Ni < 1.0 Co < 1.0 Bi < 0.5 Y < 0.5 other elements < 0.05 each and 0.15 in total, the remainder being aluminum,
cladded on its external face with an aluminum brazing alloy containing 4 to 15% of silicon and 0.01 to 0.5% of at least one of the elements Ag, Be, Bi, Ce, La, Pb, Pd, Sb, Y or Mischmetall, and fitted with fins or separators on this layer assembled by fluxless brazing under a protective atmosphere.

9. Assembly of two brazing sheets, according to one of claims 1 to 8, **characterized in that** it forms part of a heat exchanger.

10. Assembly of two brazing sheets, according to claim 9, **characterized in that** it forms part of a heat exchanger known under the term EGRC (Exhaust Gas Recirculation Cooler) in which only the exhaust gases from an automobile vehicle flow.

11. Assembly of two brazing sheets, according to claim 9, **characterized in that** it forms part of a heat exchanger known under the term CAC (Charged Air Cooler) in an EGR (Exhaust Gas Recirculation) loop, inside which a mix of fresh air and exhaust gases from an automobile vehicle flows.

12. Heat exchanger tube in which exhaust gases flow, particularly automobile vehicle exhaust gases, alone or associated with another fluid, typically air, made from an assembly of brazing sheets according to one of claims 1 to 8.

13. Heat exchanger **characterized in that** it comprises at least one tube according to claim 12.
